# EUROPÄISCHE PATENTSCHRIFT

(11) **EP 1 526 262 B1**
(45) Veröffentlichungstag und Bekanntmachung des Hinweises auf die Patenterteilung: **27.02.2008**
(21) Anmeldenummer: 03103946.4
(22) Anmeldetag: 24.10.2003
(51) Int. Cl.: F02B 75/04

(54) **Vorrichtung zur Veränderung des Verdichtungsverhältnisses eines Hubkolbenmotors**
Device for changing the compression ratio of a reciprocating piston engine
Dispositif pour modifier le taux de compression d'un moteur à piston alternatif

(43) Veröffentlichungstag der Anmeldung: 27.04.2005
(73) Patentinhaber: Ford Global Technologies, LLC, A subsidary of Ford Motor Company, Dearborn, MI 48126 (US)
(72) Erfinder: Seifert, Klaus, 50226, Frechen (DE); Heiter, Ulrich, 51371, Leverkusen (DE)
(74) Vertreter: Drömer, Hans-Carsten

(56) Entgegenhaltungen:
- FR-A- 2 647 508
- GB-A- 161 807
- US-A- 2 589 958
- US-A- 3 633 552
- US-A1- 2002 043 237

## Beschreibung

Die Erfindung betrifft eine Vorrichtung zur Veränderung des Verdichtungsverhältnisses eines Hubkolbenmotors während des Betriebes durch Verlagerung der Kurbelwellenmittelachse auf einer kreisförmigen Bahn. Unter dem Verdichtungsverhältnis eines Hubkolbenmotors versteht man das Verhältnis zwischen dem freibleibenden Verbrennungsraum, wenn der Kolben sich im oberen Totpunkt befindet, und dem gesamten Zylindervolumen, wenn sich der Kolben im unteren Totpunkt befindet.

Der Verdichtungsdruck ist vom Verdichtungsverhältnis und Füllungsgrad der Zylinder des Motors abhängig. Der Füllungsgrad wiederum ist abhängig vom statischen Druck der umgebenden Luft, der Umgebungstemperatur, den Reibungskräften bei der Gaszuführung und insbesondere im Teillastbereich von der Drosselklappensteilung. Um eine Verbesserung des thermischen Wirkungsgrades im Teillastbereich zu erreichen, muß der Verbrennungsraum im Teillastbereich bis zum Erreichen des maximal zulässigen Verdichtungsdrucks verkleinert werden. Zum Verändern des Kompressionsverhältnisses bei Brennkraftmaschinen dieser Art sind verschiedenste Lösungen bekannt und im Stand der Technik gibt es eine Reihe von Vorschlägen zur Realisierung einer variablen Verdichtung. Zum Beispiel wird die Kurbelwelle gegenüber dem Zylinder angehoben, oder es wird mit in der Länge variablen Zylindern gearbeitet. Bekannt geworden sind auch Systeme, bei welchen die Kolbenlänge variiert werden kann.

Bei einem beispielsweise in der EP-A-0063 725 beschrieben Kurbelmechanismus kann die Drehposition des Drehmittels eingestellt werden, um die Bewegung des Pleuels und damit das Verdichtungsverhältnis einzustellen. Entweder wird ein Kolben benutzt, der mit einem hydraulisch gesteuerten, teleskopartig verschiebbaren Teil versehen ist, oder die Pleuelstange wird auf dem Kurbelzapfen der Kurbelwelle unter Zwischenschaltung eines verstellbaren Exzenters gelagert. Derartige Konstruktionen sind in der DE-PS 746 612 und der DE-OS 2 114 833 beschrieben.

In der OE-OS 30 04 402 wird ein Kurbeltrieb beschrieben, bei dem eine Veränderbarkeit des Kompressionsverhältnisses während des Betriebes der Brennkraftmaschine dadurch erreicht wird, daß die Kurbelwelle selbst im Kurbelgehäuse oder in Exzenterbuchsen im Kurbelgehäuse in der Höhe verstellbar gelagert ist. Jede Exzenterbuchse ist mit einem Zahnrad vereinigt. Mittels einer Stellwelle mit je einem Zahnritzel für jede Exzenterbuchse können sämtliche Exenterbuchsen gemeinsam verdreht werden, so daß die Achse der Grundlager der Kurbelwelle gegenüber dem Kurbelgehäuse und damit auch gegenüber dem Zylinderkopf verändert werden kann. Die Exzentrizität der Exzenterbuchsen ist halb so groß wie der gewünschte Verstellweg der Kolbenoberseite. Die Exzenterbuchsen müssen demnach um etwa 180° gedreht werden, um die maximale Verstellung des Kolbenbodens gegenüber dem Zylinderkopf zu erreichen. Die Kraftübertragung erfolgt mittels eines auf der Kurbelwelle sitzenden außenverzahnten Stirnrades auf ein das Stirnrad umgebendes Hohlrad, d.h. ein innenverzahntes Zahnrad, dessen Teilkreisdurchmesser um die zweifache Exzentrizität der Exzenterbuchsen größer als der Teilkreisdurchmesser des außenverzahnten Zahnrades ist. Nachteilig ist hier, daß der Kolben durch die Verstellmechanik sehr kompliziert wird. Außerdem erhöht die Verstellmechanik das Kolbengewicht, was sich ungünstig auf die Massenkräfte und damit auf Lagerdrücke und Massenausgleich auswirkt.

In der EP 1 080 320 B1 wird ein Kurbelmechanismus beschrieben, bei dem die Einstellung des Kompressionsverhältnisses dadurch erreicht wird, daß das Drehmittel derart angeordnet ist, daß eine zweite Kurbelwelle sich bei halber Geschwindigkeit dreht, jedoch in entgegengesetzter Richtung zur ersten Kurbelwelle, wobei vorzugsweise die erste Kurbelwelle sich bei 0° und die zweite Kurbelwelle sich bei 90° am obersten Punkt des Arbeitshubes befindet, so daß der erste und der zweite Hub unter einem Winkel von 180° am Ende des Expansionshubs angeordnet sind. Ein vollständiger Drehzyklus umfaßt in diesem Fall zwei Umdrehungen der ersten Kurbelwelle und das Verhältnis zwischen Expansionshub und Kompressionshub kann durch Auswählen des ersten und des zweiten Radialabstandes bestimmt werden.

In der US-PS 5,908,014 wird ein Hubkolbenmotor mit variablem Verdichtungsverhältnis beschrieben, wobei der Kolbenhub verstellbar ist, weil die Pleuelstange kurbelwellenseitig an einem exzentrischen Kurbelzapfen gelagert ist und der exzentrische Kurbelzapfen während des Betriebes von Steuermitteln um seine Drehachse verstellbar ist.

In der US-PS 5,960,750 wird eine weitere Vorrichtung zur Veränderung der Verdichtung eines Hubkolbenmotors beschrieben. Diese Vorrichtung ermöglicht mittels lediglich eines so genannten Verriegelungsgliedes eine exzentrische Hülse in zwei Drehstellungen zu verriegeln, wobei die eine Drehstellung der Hülse etwa maximaler Verdichtung und die andere Drehstellung der Hülse etwa minimaler Verdichtung entspricht. Die Betätigung des Verriegelungsgliedes erfolgt mechanisch von außen, so daß hydraulische Ventile und zusätzliche Versorgungskanäle überflüssig sind.

Weitere gattungsgemäße Vorrichtungen zur Veränderung des Verdichtungsverhältnisses von Hubkolben motoren können der US-A-3 633 552, der GB 161 807 A oder FR-A-2 647 508 entnommen werden.

Der Erfindung liegt daher die Aufgabe zugrunde die aus dem Stand der Technik bekannten Lösungen zu verbessern und eine Vorrichtung für eine Hubkolbenmotor der eingangs geschilderten Art zu schaffen, welche angepaßt an die aktuellen Betriebszustände des Motors ein variables Verdichtungsverhältnis ermöglicht und somit zu einer Steigerung des Wirkungsgrades des Motors beiträgt.

Erfindungsgemäß wird diese Aufgabe durch die Merkmale des Anspruchs 1 gelöst. Vorteilhafte Weiterbildungen der Erfindung sind in den zugehörigen Ansprüchen 2 bis 12 aufgeführt.

Demnach beinhaltet die Erfindung eine Vorrichtung zur Veränderung des Verdichtungsverhältnisses eines Hubkolbenmotors umfassend einen Zylinderblock, einen Zylinderkopf, eine Kurbelwelle mit einer daran angeordneten Kurbel, einen in dem Zylinder hin- und hergehenden Kolben und eine Verbindungsstange, die an einem Ende mit dem Kurbelzapfen und am anderen Ende mit dem Kolben verbunden ist, wobei mindestens ein Träger mit Kurbelwellenhauptlagern für die Kurbelwelle vorgesehen ist, der einerseits auf der einen Seite um eine Seitenachse frei drehbar mit dem Zylinderblock verbunden ist und andererseits auf der gegenüberliegenden Seite über mindestens einen Ausgleichshebel mit der Achse eines Steuerarms verbunden ist, und die dadurch gekennzeichnet ist, dass der Steuerarm drehbar gelagert am Zylinderblock angeordnet ist und der mindestens eine Ausgleichshebel sowohl um eine Exzenternabe des Steuerarms als auch um einen Verbindungspunkt des mindestens einen Trägers drehbar gelagert ist, wodurch eine Veränderung des Verdichtungsverhältnisses durch Drehen des Steuerarms ermöglicht wird.

Die Winkelstellung des Steuerarms definiert die Stellung der Mittelachse der Kurbelwelle, wobei der Steuerarm über eine Steuervorrichtung um seine Drehachse einstellbar ist, wobei ausgehend von einer vorgegebenen Position durch eine Drehung des Steuerarms das Verdichtungsverhältnis bei laufendem Motor regulierbar ist.

Vorteilhaft läßt sich durch eine Drehung des Steuerarms im Uhrzeigersinn das Verdichtungsverhältnis des Motors erhöhen und durch eine Drehung des Steuerarms gegen den Uhrzeigersinn reduzieren.

Der mindestens eine Träger der Kurbelwelle ist bevorzugt als einstückiger Lagerbalken ausgebildet und trägt dabei die Kurbelwellenhauptlager, wobei er über mindestens einen Ausgleichhebel mit der Achse des Steuerarms verbunden ist.

Nach einem weiteren Merkmal ist jedes einzelne Kurbelwellenlager mit einem Kurbelwellenträger und einem mit dem Steuerarm verbundenen Ausgleichhebel versehen. Vorteilhaft sind die Seitenachse und die Drehachse des Steuerarms zur Erzielung einer gleichmäßigen Verbrennung, zur Ermöglichung eines direkten Zylinderkopfanschlusses und zur Verringerung der Verformung der Zylinderreihe symmetrisch zu beiden Seiten des Zylinderblocks angeordnet. Die Kraftübertragung, d. h. der Primärantrieb erfolgt bevorzugt über ein Zahnrad- oder Kettensystem.

Das Drehmoment der Kurbelwelle ist gemäß einer besonders vorteilhaften Ausführungsform der Erfindung über ein Zahnradsystem übertragbar, wobei ein Kurbelwellenzahnrad an einem hinteren Flansch der Kurbelwelle angeordnet ist und ein konzentrisch zur Seitenachse angeordnetes Zahnrad kämmt. Vorteilhaft weist das Zahnrad einen Flansch auf, der das Schwungrad und die Kupplung trägt, und das Drehmoment des Motors an das Getriebe überträgt. Bevorzugt beträgt das Übersetzungsverhältnis von Zahnrad zu Zahnrad 1 :1. Andere Übersetzungsverhältnisse sind aber auch möglich, um höhere oder geringere Geschwindigkeiten für die Ausgangswelle zu erzielen.

Nach einer weiteren vorteilhaften Ausführung ist ein Kurbelwellenzahnrad an einem hinteren Flansch der Kurbelwelle angeordnet und kämmt dabei ein konzentrisch zur Seitenachse angeordnetes Zahnrad, wobei ein weiteres Antriebszahnrad für das Getriebe das Drehmoment zum Getriebe leitet. Bevorzugt ist das Antriebszahnrad auf der Rückseite mit einer Nabe versehen, die die Verbindung mit dem Schwungrad und der Kupplung ermöglicht. Die Geschwindigkeit der Getriebeeingangswelle ist nach einem weiteren Merkmal durch Verwendung verschiedener Übersetzungsverhältnisse veränderbar. Diese Ausgestaltung ermöglicht die Anordnung der Getriebewelle entlang der Kurbelwelle, wodurch die Antriebseinheit eine kubische Form erhält. Ein solches Design hat Vorteile bezüglich der Höhe der Antriebseinheit (Neuanordnung der Schwungräder) und der Breite der Antriebseinheit (Neuanordnung des Getriebes) und führt zu einem verringerten Bauraumbedarf für die Antriebseinheit in dem Fahrzeug.

Die beiden vorteilhaften Ausgestaltungen führen zu einer erheblich niedrigeren Lage der Antriebseinheit, indem sie die Schwungräder nach oben verlegen. Im Hinblick auf die Aerodynamik und das Kollisionsverhalten des Fahrzeugs ist dies für die Architektur der Fahrzeugfront von Vorteil.

Die Erfindung wird nachfolgend am Beispiel eines Verbrennungsmotors vom Typ Hubkolbenmotor in den Figuren dargestellt und im einzelnen näher beschrieben. Es zeigen
- Figur 1:: eine schematische Darstellung einen Hubkolbenmotors in Rückansicht mit mechanischer Regulierung des Verdichtungsverhältnisses durch kreisförmige Kurbelwellenbewegung um die Mitte (Punkt C) der Seitenachse (6),
- Figur 2:: eine schematische Darstellung einen Hubkolbenmotors in Rückansicht, mit nebeneinander angeordnetem Motor und Getriebe (In-Line Design),
- Figur 2a:: eine Prinzipskizze der Ausführung nach Figur 2 (Blockschaltbild) in Draufsicht,
- Figur 3:: eine schematische Darstellung einen Hubkolbenmotors in Rückansicht, mit nebeneinander angeordnetem Motor und Getriebe (Block Design),
- Figur 3a:: eine Prinzipskizze der Ausführung nach Figur 3 (Blockschaltbild) in Draufsicht.

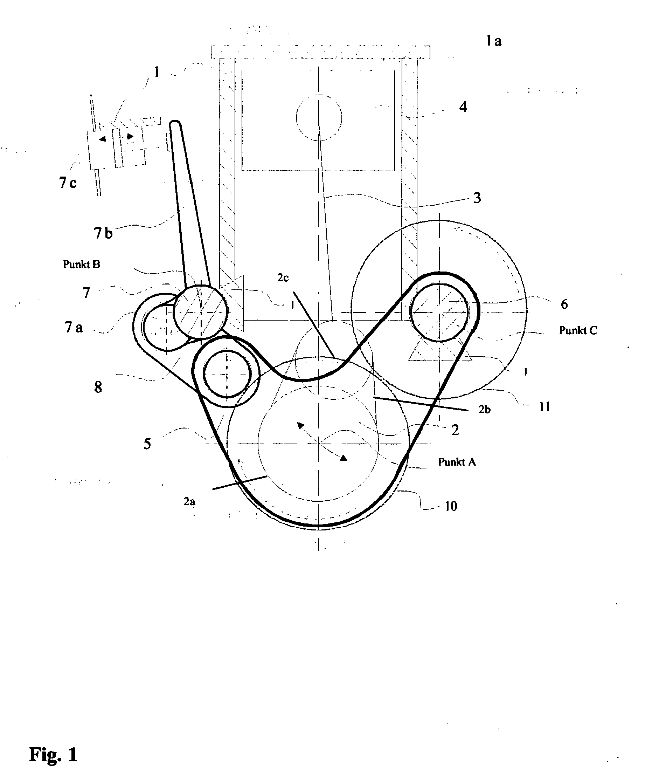

Eine durch kreisförmige Kurbelwellenbewegung um die Mittelachse einstellbare Verdichtungsverhältnisvorrichtung für eine Hubkolbenkraftmaschine ist in der Figur 1 schematisch dargestellt und umfaßt einen Zylinderblock 1, einen Zylinderkopf 1a, eine Kurbelwelle 2 mit einer festgelegten Kurbel 2b, einen in dem Zylinder hin- und hergehenden Kolben 4 und eine Verbindungsstange 3 (Pleuelstange), die mit ihrem ersten Ende mit dem Kurbelzapfen 2c und mit ihrem zweiten Ende mit dem Kolben 4 verbunden ist. Ein Träger 5 für die Kurbelwelle 2 nimmt das Kurbelwellenhauptlager 2a auf und ist auf der einen Seite an der Seitenachse 6 mit dem Zylinderblock 1 und auf der anderen Seite des Zylinderblocks 1 mit der Achse des Steuerarms 7 und dem Ausgleichhebel 8 verbunden. Der Träger 5 der Kurbelwelle 2 ist um die Seitenachse 6 frei drehbar, der Ausgleichhebel 8 ist um die Exzenternabe 7a des Steuerarms 7 und um den Verbindungspunkt am Ausgleichhebel 8 frei drehbar. Die Winkelstellung des Steuerarms 7b definiert die eigentliche Stellung der Mittelachse der Kurbelwelle 2 (Punkt A). Bei laufendem Motor kann der Steuerarm 7b über eine Steuervorrichtung 7c um seine Drehachse (Punkt B) eingestellt werden und verändert somit das Verdichtungsverhältnis des Motors. Ausgehend von einer vorgegebenen Position erhöht eine Drehung des Steuerarms 7b im Uhrzeigersinn das Verdichtungsverhältnis des Motors (Punkt A steigt), während durch eine Drehung des Steuerarms 7b gegen den Uhrzeigersinn das Verdichtungsverhältnis reduziert wird (sinkender Punkt A). Während dies erfolgt, bleibt der Mittenabstand zwischen der Seitenachse 6 (Punkt C) und dem Kurbelwellenhauptlager 2a (Punkt A) gleich, während der Mittenabstand zwischen dem Steuerarm 7 (Punkt B) und dem Kurbelwellenhauptlager 2a (Punkt A) veränderlich ist. Der Träger 5 der Kurbelwelle ist als einstückiger Lagerbalken ausgebildet und trägt die Kurbelwellenhauptlager 2a, wobei er über mindestens einen Ausgleichhebel 8 mit der Achse des Steuerarms 7 verbunden ist. Alternativ hierzu kann jedes einzelne Kurbelwellenlager mit einem Träger 5 und einem mit der Achse des Steuerarms 7 verbundenen Ausgleichhebel 8 ausgerüstet sein.

Um eine gleichmäßige Verbrennung zu erzielen, einen direkten Zylinderkopfanschluß zu ermöglichen und die Verformung der Zylinderreihe zu verringern, sind die Seitenachse 6 (Punkt C) und die Drehachse des Steuerarms 7 (Punkt B) symmetrisch zu beiden Seiten des Zylinders angeordnet. Der Primärantrieb besteht aus einem Zahnrad- oder einem Kettensystem.

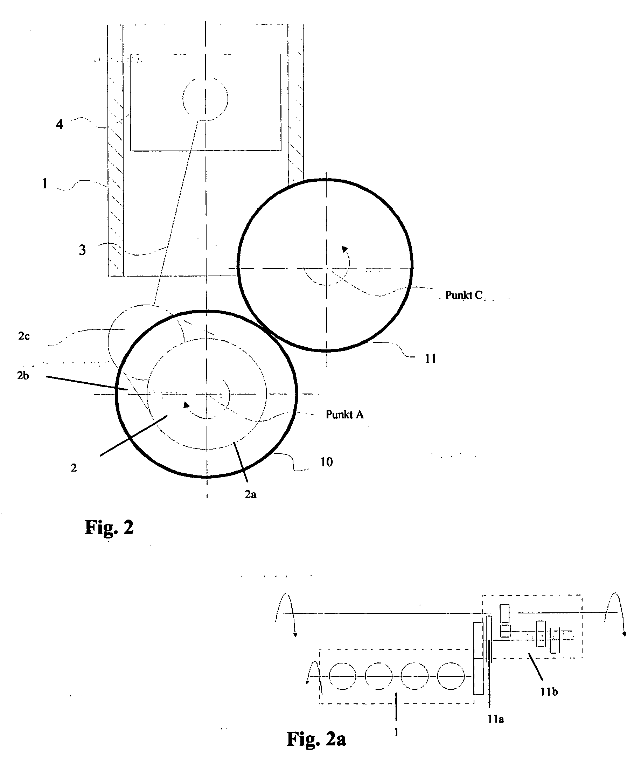

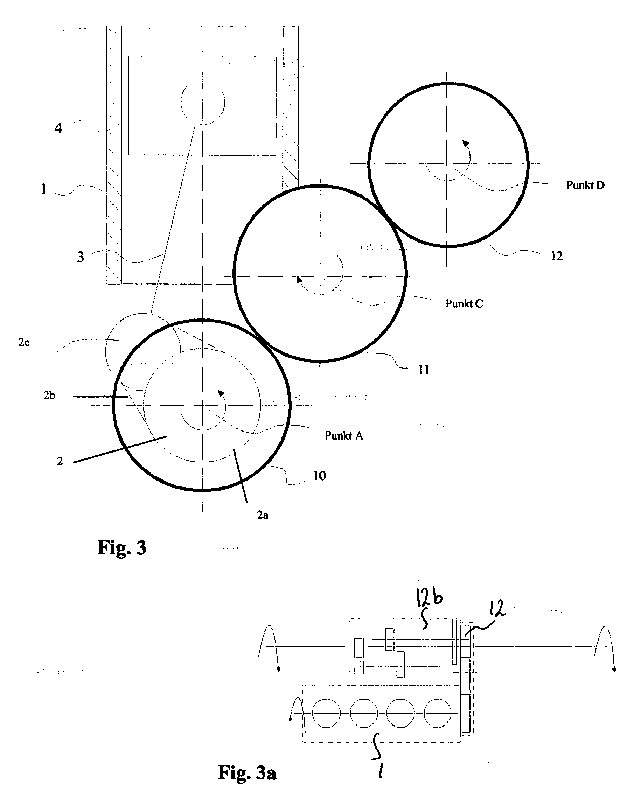

Es gibt zwei Möglichkeiten Motor und Getriebe aneinander anzupassen: Figuren 2 und 2a im In-line Design oder gemäß den Figuren 3 und 3a im Block Design. Beide Ausgestaltungen führen zu einer erheblich niedrigeren Höhe der Antriebseinheit, indem sie die Schwungräder nach oben verlegen. Im Hinblick auf die Aerodynamik und das Kollisionsverhalten des Fahrzeugs ist dies für die Architektur der Fahrzeugfront von Vorteil. Zusammen mit einer Trockensumpfschmierung für das Motoröl ist somit eine neue Generation von kompakten Antriebseinheiten in Fahrzeugen machbar geworden. In der Ausführung nach den Figuren 2 und 2a wird das Drehmoment der Kurbelwelle 2 über ein Zahnradsystem übertragen. Ein Kurbelwellenzahnrad 10 ist am hinteren Flansch der Kurbelwelle 2 (Punkt A) angeordnet und kämmt ein konzentrisch zur Seitenachse 5 (Punkt C) angeordnetes Zahnrad 11, wodurch die Kurbelwelle sich frei bewegen kann. Das Zahnrad 11 hat einen Flansch, der das Schwungrad und die Kupplung 11a trägt und das Drehmoment des Motors an das Getriebe 11 b überträgt. Zur Handhabung von derzeitigen Ausgestaltungen von Übertragungen und Endantrieb hat das Zahnrad 10 zu Zahnrad 11 das Übersetzungsverhältnis 1:1, aber andere Übersetzungsverhältnisse sind möglich, um höhere oder geringere Geschwindigkeiten für die Ausgangswelle zu erzielen. In dieser Ausgestaltung muß der Motor gegen den Uhrzeigersinn drehen.

In den Figuren 3 und 3a sind das Kurbelwellenzahnrad 10 und das Seitenachsenzahnrad 11 analog der oben beschriebenen Ausführung angeordnet. Ein zusätzliches Antriebszahnrad 12 für das Getriebe 12b leitet das Drehmoment zum Getriebe 12b. Das Zahnrad 12 hat auf der Rückseite eine Nabe und ermöglicht die Verbindung mit dem Schwungrad und der Kupplung. Die Geschwindigkeit der Getriebeeingangswelle kann durch Verwendung verschiedener Übersetzungsverhältnisse verändert werden. Diese Ausgestaltung ermöglicht die Anordnung der Getriebewelle entlang der Kurbelwelle, wodurch die Antriebseinheit eine kubische Form erhält. Eine solche Ausgestaltung hat Vorteile bezüglich der Höhe des Antriebseinheiten (Neuanordnung der Schwungräder) und der Breite der Antriebseinheit (Neuanordnung des Getriebes) und führt zu einem verringerten Bauraumbedarf für die Antriebseinheit in dem Fahrzeug.

## Patentansprüche

1. Vorrichtung zur Veränderung des Verdichtungsverhältnisses eines Hubkolbenmotors umfassend einen Zylinderblock (1), einen Zylinderkopf (1 a), eine Kurbelwelle (2) mit einer daran angeordneten Kurbel (2b), einen in dem Zylinder hin- und hergehenden Kolben (4) und eine Verbindungsstange (3), die an einem Ende mit dem Kurbelzapfen (2c) und am anderen Ende mit dem Kolben (4) verbunden ist, wobei mindestens ein Träger (5) mit Kurbelwellenhauptlagern (2a) für die Kurbelwelle (2) vorgesehen ist, der einerseits auf der einen Seite um eine Seitenachse (6) frei drehbar mit dem Zylinderblock (1) verbunden ist und andererseits auf der gegenüberliegenden Seite über mindestens einen Ausgleichshebel (8) mit der Achse (B) eines Steuerarms (7b) verbunden ist,
**dadurch gekennzeichnet, daß**
der Steuerarm (7b) drehbar gelagert am Zylinderblock (1) angeordnet ist und der mindestens eine Ausgleichshebel (8) sowohl um eine Exzenternabe (7a) des Steuerarms (7b) als auch um einen Verbindungspunkt des mindestens einen Trägers (5) drehbar gelagert ist, wodurch eine Veränderung des Verdichtungsverhältnisses durch Drehen des Steuerarms (7b) ermöglicht wird.

2. Vorrichtung nach Anspruch 1,
**dadurch gekennzeichnet, daß**
eine Steuervorrichtung (7c) vorgesehen ist, mit der der Steuerarm (7b) in seiner Winkelstellung einstellbar ist.

3. Vorrichtung nach den Ansprüchen 1 oder 2,
**dadurch gekennzeichnet, daß**
der mindestens eine Träger (5) der Kurbelwelle (2) als einstückiger Lagerbalken ausgebildet ist und die Kurbelwellenhauptlager (2a) trägt.

4. Vorrichtung nach einem der vorherigen Ansprüche,
**dadurch gekennzeichnet, daß**
jedes einzelne Kurbelwellenhauptlager (2a) mit einem Träger (5) und einem mit dem Steuerarm (7b) verbundenen Ausgleichshebel (8) versehen ist.

5. Vorrichtung nach einem der vorherigen Ansprüche,
**dadurch gekennzeichnet, daß**
die Seitenachse (6) und die Achse (B) des Steuerarms (7b) symmetrisch zu beiden Seiten des Zylinderblocks (1) angeordnet sind.

6. Vorrichtung nach einem der vorherigen Ansprüche,
**dadurch gekennzeichnet, daß**
die Kraftübertragung über ein Zahnrad- oder Kettensystem erfolgt.

7. Vorrichtung nach Anspruch 6,
**dadurch gekennzeichnet, daß**
das Drehmoment der Kurbelwelle (2) über ein Zahnradsystem übertragbar ist, wobei ein Kurbelwellenzahnrad (10) an einem hinteren Flansch der Kurbelwelle (2) angeordnet ist und ein konzentrisch zur Seitenachse (6) angeordnetes Zahnrad (11) kämmt.

8. Vorrichtung nach Anspruch 7,
**dadurch gekennzeichnet, daß**
das Zahnrad (11) einen Flansch aufweist, der das Schwungrad und die Kupplung (11a) trägt, und das Drehmoment des Motors an das Getriebe (11 b) überträgt.

9. Vorrichtung nach Anspruch 7 oder 8,
**dadurch gekennzeichnet, daß**
das Übersetzungsverhältnis von Zahnrad (10) zu Zahnrad (11) 1:1 beträgt.

10. Vorrichtung nach einem der Ansprüche 7 bis 9,
**dadurch gekennzeichnet, daß**
ein Kurbelwellenzahnrad (10) an einem hinteren Flansch der Kurbelwelle (2) angeordnet ist und ein konzentrisch zur Seitenachse (6) angeordnetes Zahnrad (11) kämmt, wobei ein weiteres Antriebszahnrad (12) das Drehmoment zum Getriebe (12b) leitet.

11. Vorrichtung nach Anspruch 10,
**dadurch gekennzeichnet, daß**
das Zahnrad (12) auf der Rückseite eine Nabe aufweist, die die Verbindung mit dem Schwungrad und der Kupplung ermöglicht.

12. Vorrichtung nach einem der vorherigen Ansprüche,
**dadurch gekennzeichnet, daß**
die Geschwindigkeit der Getriebeeingangswelle durch Verwendung verschiedener Übersetzungsverhältnisse veränderbar ist.

## Claims

1. Device for varying the compression ratio of a reciprocating-piston engine comprising a cylinder block (1), a cylinder head (1a), a crankshaft (2) with a crank (2b) arranged thereon, a piston (4) which moves in an oscillating fashion in the cylinder, and a connecting rod (3) which is connected at one end to the crank pin (2c) and at the other end to the piston (4), with at least one support (5) having crankshaft main bearings (2a) for the crankshaft (2) being provided, which support (5) is firstly connected, at one side, to the cylinder block (1) so as to be freely rotatable about a side axle (6), and is secondly connected, at the opposite side, by means of at least one compensating lever (8) to the axle (B) of a control arm (7b),
**characterized in that**
the control arm (7b) is arranged so as to be rotatably mounted on the cylinder block (1) and the at least one compensating lever (8) is mounted so as to be rotatable both about an eccentric hub (7a) of the control arm (7b) and also about a connecting point of the at least one support (5), as a result of which a variation of the compression ratio by means of a rotation of the control arm (7b) is permitted.

2. Device according to Claim 1,
**characterized in that**
a control device (7c) is provided, by means of which the control arm (7b) can be adjusted in terms of its angular position.

3. Device according to Claims 1 or 2,
**characterized in that**
the at least one support (5) of the crankshaft (2) is embodied as a single-piece bearing beam and supports the crankshaft main bearing (2a).

4. Device according to one of the preceding claims,
**characterized in that**
each individual crankshaft main bearing (2a) is provided with a support (5) and a compensating lever (8) which is connected to the control arm (7b).

5. Device according to one of the preceding claims,
**characterized in that**
the side axle (6) and the axle (B) of the control arm (7b) are arranged symmetrically at both sides of the cylinder block (1).

6. Device according to one of the preceding claims,
**characterized in that**
the force transmission takes place by means of a gearwheel or chain system.

7. Device according to Claim 6,
**characterized in that**
the torque of the crankshaft (2) can be transmitted by means of a gearwheel system, with a crankshaft gearwheel (10) being arranged on a rear flange of the crankshaft (2) and meshing with a gearwheel (11) which is arranged concentrically with respect to the side axle (6).

8. Device according to Claim 7,
**characterized in that**
the gearwheel (11) has a flange which supports the flywheel and the clutch (11a) and transmits the torque of the engine to the transmission (11b).

9. Device according to Claim 7 or 8,
**characterized in that**
the transmission ratio of gearwheel (10) to gearwheel (11) is 1:1.

10. Device according to one of Claims 7 to 9,
**characterized in that**
a crankshaft gearwheel (10) is arranged on a rear flange of the crankshaft (2) and meshes with a gearwheel (11) which is arranged concentrically with respect to the side axle (6), with a further drive input gearwheel (12) conducting the torque to the transmission (12b).

11. Device according to Claim 10,
**characterized in that**
the gearwheel (12) has a hub on the rear side, which hub permits the connection to the flywheel and the clutch.

12. Device according to one of the preceding claims,
**characterized in that**
the speed of the transmission input shaft can be varied by using different transmission ratios.

## Revendications

1. Dispositif pour modifier le rapport de compression d'un moteur à piston alternatif comprenant un bloc cylindre (1), une culasse (1a), un vilebrequin (2) sur lequel est montée une manivelle (2b), un piston (4) animé d'un mouvement de va-et-vient dans le cylindre et une tige de connexion (3), qui est connectée à une extrémité au maneton de vilebrequin (2c) et à l'autre extrémité au piston (4), au moins un support (5) étant pourvu de paliers principaux de vilebrequin (2a) pour le vilebrequin (2), qui est connecté d'une part d'un côté au bloc cylindre (1) de manière à pouvoir tourner librement autour d'un axe latéral (6) et d'autre part du côté opposé par le biais d'au moins un levier d'équilibrage (8) à l'axe (B) d'un bras de commande (7b),
**caractérisé en ce que**
le bras de commande (7b) est monté à rotation sur le bloc cylindre (1) et l'au moins un levier d'équilibrage (8) est monté à rotation à la fois autour d'un moyeu excentré (7a) du bras de commande (7b) et autour d'un point de connexion de l'au moins un support (5), de sorte qu'une modification du rapport de compression puisse être obtenue par rotation du bras de commande (7b).

2. Dispositif selon la revendication 1,
**caractérisé en ce que**
l'on prévoit un dispositif de commande (7c) avec lequel la position angulaire du bras de commande (7b) peut être ajustée.

3. Dispositif selon les revendications 1 ou 2,
**caractérisé en ce que**
l'au moins un support (5) du vilebrequin (2) est réalisé sous forme de barre support d'une seule pièce et porte les paliers principaux de vilebrequin (2a).

4. Dispositif selon l'une quelconque des revendications précédentes,
**caractérisé en ce que**
chaque palier principal de vilebrequin (2a) est pourvu d'un support (5) et d'un levier d'équilibrage (8) associé au bras de commande (7b).

5. Dispositif selon l'une quelconque des revendications précédentes,
**caractérisé en ce que**
l'axe latéral (6) et l'axe (B) du bras de commande (7b) sont disposés symétriquement des deux côtés du bloc cylindre (1).

6. Dispositif selon l'une quelconque des revendications précédentes,
**caractérisé en ce que**
le transfert de forces s'effectue par le biais d'un système de roue dentée ou de chaîne.

7. Dispositif selon la revendication 6,
**caractérisé en ce que**
le couple du vilebrequin (2) peut être transmis par le biais d'un système de roue dentée, une roue dentée de vilebrequin (10) étant disposée sur une bride arrière du vilebrequin (2) et s'engrenant avec une roue dentée (11) disposée concentriquement à l'axe latéral (6).

8. Dispositif selon la revendication 7,
**caractérisé en ce que**
la roue dentée (11) présente une bride qui porte la roue volante et l'embrayage (11a), et transmet le couple du moteur à la transmission (11b).

9. Dispositif selon la revendication 7 ou 8,
**caractérisé en ce que**
le rapport de transmission de la roue dentée (10) à la roue dentée (11) est de 1:1.

10. Dispositif selon l'une quelconque des revendications 7 à 9,
**caractérisé en ce qu'**
une roue dentée de vilebrequin (10) est disposée sur une bride arrière du vilebrequin (2) et s'engrène avec une roue dentée (11) disposée concentriquement à l'axe latéral (6), une autre roue dentée d'entraînement (12) conduisant le couple vers la transmission (12b).

11. Dispositif selon la revendication 10,
**caractérisé en ce que**
la roue dentée (12) présente sur sa face arrière un moyeu qui permet la connexion avec la roue volante et l'embrayage.

12. Dispositif selon l'une quelconque des revendications précédentes,
**caractérisé en ce que**
la vitesse de l'arbre d'entrée de la transmission peut être modifiée en utilisant différents rapports de transmission.
